# FASCICULE DE BREVET EUROPEEN

(11) **EP 3 802 116 B1**
(45) Date de publication et mention de la délivrance du brevet: **06.07.2022**
(21) Numéro de dépôt: 19724520.2
(22) Date de dépôt: 21.05.2019
(51) Int. Cl.: B32B 17/10

(54) **VITRAGE LATÉRAL DE MOYEN DE TRANSPORT POUVANT SERVIR D'ISSUE DE SECOURS COMPRENANT UN VERRE EXTÉRIEUR PRÉSENTANT UN RETRAIT**
ALS NOTAUSSTIEG VERWENDBARES SEITENFENSTER EINES TRANSPORTMITTELS MIT EINER ZURÜCKGESETZTEN ÄUSSEREN GLASSCHEIBE
SIDE WINDOW OF THE MEANS OF TRANSPORT THAT CAN BE USED AS AN EMERGENCY EXIT, COMPRISING AN EXTERNAL PANE OF GLASS THAT IS SET BACK

(30) Priorité: 31.05.2018 FR 1854712
(43) Date de publication de la demande: 14.04.2021
(73) Titulaire: SAINT-GOBAIN GLASS FRANCE, 92400 Courbevoie (FR)
(72) Inventeur: GASTAL, Guillaume, 68-200 ZARY (PL)
(74) Mandataire: Saint-Gobain Recherche
(86) Numéro de dépôt international: PCT/EP2019/063047
(87) Numéro de publication internationale: WO 2019/228850

(56) Documents cités:
- EP-A2- 0 908 302
- WO-A1-2016/151256
- FR-A1- 2 175 910
- FR-A1- 2 712 840
- FR-A1- 3 058 097
- US-A- 4 933 227

## Description

L'invention concerne la réalisation d'un vitrage latéral d'un moyen de transport, et en particulier un vitrage de train, ledit vitrage étant un vitrage multiple, fixe.

Un tel vitrage, multiple, comprend habituellement :
- une vitre extérieure ayant une face extérieure qui fait face à un espace extérieur, une face intermédiaire à l'opposé de la face extérieure, ainsi qu'un chant périphérique,
- une vitre intérieure ayant une face intérieure qui fait face à un espace intérieur, une face intermédiaire à l'opposé de la face intérieure, ainsi qu'un chant périphérique,
- et une structure de cadre de vitrage qui tient la vitre extérieure et la vitre intérieure ensemble de telle sorte que le vitrage sépare ledit espace extérieur dudit espace intérieur en ménageant une cavité de vitrage qui est alors située entre la vitre extérieure et la vitre intérieure.

Une structure de cadre de vitrage réalise le maintien mécanique du double vitrage dans la baie que ce double vitrage doit fermer ; elle est au contact au moins en partie direct et/ou au moins en partie indirect (c'est-à-dire par interposition d'un cordon de colle) avec au moins une des vitres du double vitrage.

Pour qu'un vitrage latéral d'un moyen de transport soit de sécurité, une vitre au moins est feuilletée, et notamment la vitre extérieure, et comprend alors au moins une feuille de verre extérieure, une feuille de verre intérieure, ainsi qu'une feuille de matière plastique située entre ladite feuille de verre extérieure et ladite feuille de verre intérieure, chaque feuille de la vitre feuilletée présentant un chant périphérique. La feuille de matière plastique est située en contact (sans espace) entre d'une part une face intermédiaire de la feuille de verre extérieure qui est tournée vers l'intérieur et d'autre part une face intermédiaire de la feuille de verre intérieure qui est tournée vers l'extérieur.

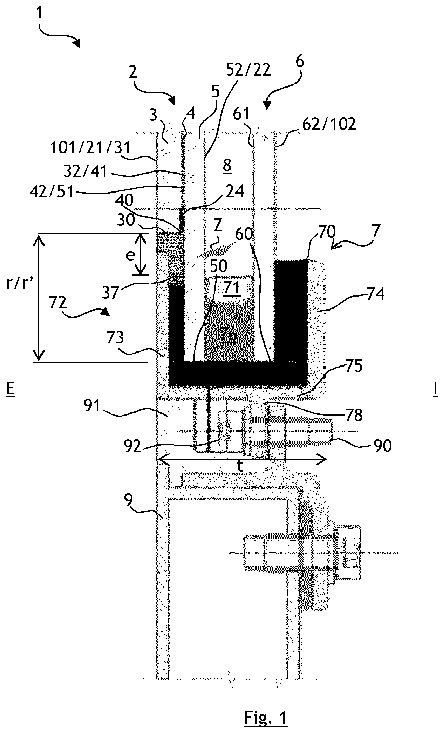

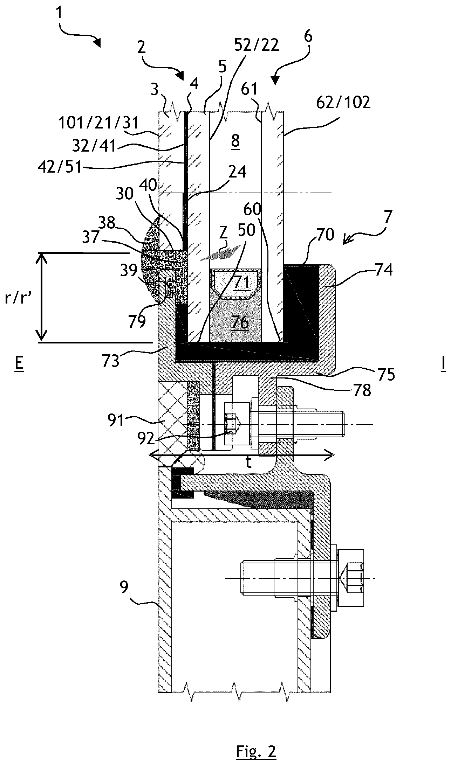

La demande de brevet français N° FR 2 712 840 expose la réalisation d'un double vitrage de sécurité dont la vitre extérieure est feuilletée. Les figures 1 et 2 de ce document montrent que la structure de cadre de vitrage qui tient le substrat extérieur et le substrat intérieur ensemble pour former la cavité de vitrage comporte d'une part un espaceur (référencé 8 et 18 sur ces figures) et d'autre part une matière de scellement, ou mastic, (référencée 9 et 19 sur ces figures). Cet espaceur et cette matière de scellement forment ce qu'il est convenu d'appeler « les moyens d'assemblage du double vitrage ». Cette matière de scellement forme un cordon de colle qui est au contact de la vitre intérieure et de ladite feuille de verre intérieure.

Plus précisément, la matière de scellement est au contact de la face intermédiaire de la vitre intérieure et pour la vitre de verre extérieure, comme la feuille de verre extérieure présente un débord périphérique qui s'étend au-delà de la périphérie de la feuille de verre intérieure, la matière de scellement est au contact des deux faces de ces deux feuilles de verre qui sont tournées vers l'intérieur, ainsi que du chant de la feuille de verre intérieure.

L'art antérieur connaît par ailleurs de la demande de brevet européen N° EP 2 363 284, et en particulier de la variante de la figure 2, une structure de vitrage latéral de moyen de transport, ce vitrage étant multiple, fixe, de sécurité et issue de secours. Ce document expose une solution permettant de faciliter la rupture du vitrage, et ainsi de faciliter l'évacuation.

Dans ce document, il est proposé que la feuille intercalaire de matière plastique ainsi que la feuille de verre intérieure d'un feuilletage de renfort de la vitre extérieure du vitrage ne soient pas au contact des moyens d'assemblage du double vitrage en prévoyant que le chant de la feuille intercalaire de matière plastique ainsi que le chant de la feuille de verre intérieure soient en retrait des moyens d'assemblage du double vitrage vers le centre du vitrage. Ce retrait est le même tout autour de la périphérie de la vitre extérieure : la distance entre d'une part le chant de la feuille intercalaire de matière plastique et le chant de la feuille de verre intérieure et d'autre part le chant de la feuille de verre extérieure est la même tout le long de la périphérie.

Seul un feuilletage, comprenant au moins une feuille de matière plastique puis une feuille de verre qui sont prévus dans cet ordre sur une surface d'un substrat d'un vitrage, permet de réaliser un vitrage de moyen de transport dit « de sécurité ». Un tel vitrage de sécurité est plus résistant aux chocs, tout en permettant au besoin une évacuation après rupture des substrats en verre et en découpant la feuille de matière plastique.

Un inconvénient majeur des vitrages multiples de moyens de transport de sécurité est que lorsque la feuille de verre extérieure se brise lors d'un trajet sous l'impact d'un objet extérieur, alors il est nécessaire, pour la sécurité des passagers, de procéder à l'évacuation de tous les passagers du compartiment dont le vitrage présente une vitre extérieure dont la feuille extérieure est brisée car il existe un risque que la vitre extérieure soit en totalité expulsée du vitrage sous l'effet d'une ou de plusieurs ondes de pression dynamique et de flux d'air.

Une solution a été proposée dans la demande internationale de brevet N° WO 2016/151256 : un pont de liaison supplémentaire est réalisé entre d'une part la vitre intérieure et d'autre part la feuille de verre intérieure et/ou la feuille intercalaire de matière plastique qui appartient (ou appartiennent) à la vitre extérieure feuilletée.

Cette solution donne satisfaction en diminuant très fortement le risque que la vitre extérieure soit en totalité expulsée du vitrage sous l'effet d'une ou de plusieurs ondes de pression dynamique et de flux d'air mais est encore susceptible d'amélioration pour les trains à grande vitesse (notamment ceux roulant à plus de 250 km/h) car pour ces trains, la pression/dépression subie par le vitrage au passage d'infrastructures massives (type pont, tunnel) est très élevée (de l'ordre de plus ou moins 8 kPa) et il existe un risque que sous l'effet de cette pression/dépression des éclats ou fragments de la feuille de verre extérieure brisée soient éjectés en direction de l'espace extérieur et cette éjection engendre un risque de blessure pour une personne se trouvant à proximité lors du passage du train.

Le but de l'invention est de permettre de réaliser un vitrage multiple, fixe, qui présente une facilité de destruction dans une partie extérieure, tout en permettant de mieux maintenir en position cette partie extérieure si elle est cassée involontairement (dans une situation autre que l'évacuation de secours).

L'invention repose ainsi sur le fait de prévoir un feuilletage de renfort dans la partie extérieure de vitrage, et de prévoir en outre que la feuille de verre extérieure de ce feuilletage présente un retrait vers le centre du vitrage (ou autrement dit un retrait en direction centripète) tel qu'une partie du chant de cette feuille de verre extérieure et de préférence la totalité du chant de cette feuille de verre, ne soit pas retenu directement par la structure de cadre de vitrage mais seulement indirectement, grâce au feuilletage avec la feuille de verre intérieure, qui elle est retenu directement par la structure de cadre de vitrage (ou « structure de châssis » du vitrage).

L'invention a pour objet, dans son acception la plus large, un vitrage latéral d'un moyen de transport, en particulier un vitrage de train, selon la revendication 1. Ledit vitrage est un vitrage multiple, fixe, présentant une face extérieure qui fait face à un espace extérieur et une face intérieure qui fait face à un espace intérieur, ledit vitrage comprenant :
- une vitre extérieure ayant une face extérieure qui fait face à un espace extérieur, ladite vitre extérieure étant feuilletée et comprenant au moins une feuille de verre extérieure, une feuille de verre intérieure, ainsi qu'une feuille de matière plastique située entre ladite feuille de verre extérieure et ladite feuille de verre intérieure, chaque feuille de ladite vitre extérieure présentant un chant périphérique,
- une vitre intérieure, qui peut éventuellement être feuilletée, ayant une face intérieure qui fait face à un espace intérieur, une face intermédiaire à l'opposé de la face intérieure, ainsi qu'un chant périphérique,
- une structure de cadre de vitrage qui est située en périphérie de ladite vitre extérieure et en périphérie de ladite vitre intérieure et qui tient ces deux vitres ensemble de telle sorte que le vitrage réalise une séparation entre ledit espace extérieur et ledit espace intérieur avec une cavité de vitrage située entre lesdites vitres.

Le vitrage selon l'invention est remarquable en ce que le chant de ladite feuille de verre extérieure de la vitre extérieure est situé en retrait du chant de ladite feuille de verre intérieure de la vitre extérieure (c'est-à-dire plus vers le centre de la vitre extérieure) sur (ou selon) une partie au moins de la longueur du chant de ladite feuille de verre extérieure et de préférence sur (ou selon) la totalité de la longueur du chant de ladite feuille de verre extérieure et en ce que ladite structure de cadre de vitrage n'est pas au contact de ladite feuille de verre extérieure.

Ainsi, la feuille de verre extérieure de la vitre extérieure feuilletée n'est pas directement retenue le long d'une partie de sa périphérie, et de préférence le long de la totalité de sa périphérie, par la structure de cadre de vitrage. C'est la feuille intercalaire de matière plastique qui, pour l'essentiel, voire uniquement elle, attache la feuille de verre extérieure au reste du vitrage. En « isolant mécaniquement », en quelque sorte la feuille de verre extérieure des parties rigides du reste du vitrage (en particulier la feuille de verre intérieure et la structure de cadre de vitrage), lorsque la feuille de verre extérieure est cassée accidentellement, ces parties rigides ne transmettent plus de sollicitation mécanique aux éclats ou fragments de la feuille de verre extérieure et ces éclats ou fragments sont alors biens maintenus par la feuille intercalaire de matière plastique, en limitant, et même annulant, le risque qu'ils se détachent.

Il est possible de réaliser le retrait discontinu selon la périphérie de la feuille de verre extérieure mais ce retrait est de préférence continu, le long de tout le pourtour du vitrage, afin de faciliter la fabrication du vitrage et le positionnement des feuilles de verre de la vitre feuilletée lors du feuilletage.

La notion de retrait est utilisée en référence au centre de feuille de verre, de la vitre, ou du vitrage ; elle désigne un positionnement centripète, plus proche de ce centre, que ce qui est utilisé pour référence.

Ce retrait est tel qu'il n'y a de préférence aucun élément constituant la structure de cadre de vitrage en vis-à-vis et au contact du chant de la feuille de verre extérieure, plus vers l'intérieur ou plus vers l'extérieur.

La fabrication d'une vitre feuilletée (ici la vitre extérieure) dont les feuilles constitutives n'ont pas toutes des dimensions identiques (longueur, hauteur) est plus compliquée, mais les avantages procurés par ledit retrait sont très importants.

De préférence, ladite structure de cadre de vitrage comporte un cordon de colle qui est au contact au moins de la vitre intérieure et qui n'est pas au contact de ladite feuille de verre extérieure de la vitre extérieure ; ce cordon de colle est, de préférence, au contact de ladite face intérieure de ladite vitre intérieure, du chant de ladite vitre intérieure, du chant de ladite feuille de verre intérieure et d'une face intercalaire de ladite feuille de verre intérieure.

De préférence encore, ledit cordon de colle est seulement au contact de ladite face intérieure de ladite vitre intérieure, du chant de ladite vitre intérieure, du chant de ladite feuille de verre intérieure et d'une face intercalaire de ladite feuille de verre intérieure, sans être au contact ni avec ladite face intermédiaire de ladite vitre intérieure, ni avec une face intérieure de ladite feuille de verre intérieure, ni avec la feuille intercalaire de matière plastique.

Le chant de ladite feuille de matière plastique est, de préférence, situé en retrait du chant de ladite feuille de verre intérieure sur une partie au moins de la longueur du chant de ladite feuille de matière plastique et de préférence sur la totalité de la longueur du chant de ladite feuille de matière plastique. De préférence encore, la valeur du retrait dudit chant de ladite feuille de matière plastique est identique à la valeur du retrait dudit chant de ladite feuille de verre extérieure : le pourtour de ladite feuille de matière plastique suit au moins sur une partie de sa longueur et de préférence sur la totalité de sa longueur le pourtour de ladite feuille de verre extérieure.

Pour faciliter la fabrication du vitrage, ladite feuille de verre intérieure présente de préférence des dimensions identiques (longueur, hauteur) aux dimensions de la vitre intérieure ; la périphérie de ladite feuille de verre intérieure ne présente de préférence pas de retrait par rapport à la périphérie de la vitre intérieure.

Ladite vitre intérieure peut elle-même être feuilletée mais alors, pour faciliter la fabrication, les feuilles constitutives de la vitre présentent de préférence des dimensions identiques (longueur, hauteur).

Le retrait du chant de ladite feuille de verre extérieure de la vitre extérieure est compris entre 5,0 et 50,0 mm, et de préférence entre 15,0 et 35,0 mm. Ainsi, le clair de vision du vitrage est relativement grand par rapport au clair de baie.

Ledit vitrage comprend de préférence un espaceur qui est situé entre ladite feuille de verre intérieure et ladite vitre intérieure, en retrait des chants de ladite feuille de verre intérieure et de ladite vitre intérieure tout en étant écarté, vu en coupe transversale, d'un écart plus en périphérie que la continuité transversale du chant de ladite feuille de verre extérieure, ledit écart étant compris entre 2,0 et 30,0 mm, et de préférence entre 5,0 et 20,0 mm, voire entre 6,0 et 15,0 mm. Ce retrait permet de réaliser une zone de désolidarisation de la vitre extérieure pour le franchissement de secours qui est suffisamment grande sans trop diminuer le clair de vision du vitrage par rapport au clair de baie.

Ladite structure de cadre de vitrage comprend de préférence un cadre présentant en coupe transversale une aile extérieure, une aile intérieure parallèle à ladite aile extérieure et une base reliant lesdites ailes, ledit cadre étant de préférence collé directement (avec contact direct) à ladite feuille de verre intérieure et à ladite vitre intérieure grâce audit cordon de colle.

Ladite aile extérieure est alors de préférence située dans la continuité d'aspect d'une face extérieure de ladite feuille de verre extérieure.

Un cordon de joint d'étanchéité n'appartenant pas à la structure de cadre de vitrage est de préférence en outre présent entre le chant de ladite feuille de verre extérieure et l'aile extérieure dudit cadre. Ce cordon de joint d'étanchéité peut s'étendre plus en périphérie et être en outre présente entre une face intercalaire de la feuille de verre intérieure et l'aile extérieure dudit cadre.

Ledit cadre comporte par ailleurs de préférence des moyens pour la fixation dudit vitrage qui sont situés plus en périphérie que ladite base.

Le vitrage selon l'invention ne comporte, de préférence, aucun élément saillant vers l'extérieur, au-delà de la face extérieure dudit vitrage, qui est aussi la face extérieure de ladite vitre extérieure, afin de diminuer les frottements dans l'air pour le moyen de transport. Le vitrage peut alors être positionné affleurant avec la baie de carrosserie.

De préférence, aucun élément du vitrage ne dépasse plus à l'extérieur ou plus à intérieur que l'épaisseur dudit cadre.

Lorsque le vitrage est orienté verticalement et que le retrait est tout le long du chant de la feuille de verre extérieure de la vitre extérieure, cette feuille de verre extérieure s'arrête en haut, sur les côtés et en bas à une distance du chant périphérique de la feuille de verre intérieure qui la porte, afin que lorsque cette feuille de verre extérieure est brisée, involontairement, la feuille de matière plastique retienne la feuille de verre extérieure.

Il reste possible de permettre une évacuation de secours en brisant les feuilles de verre et en découpant la feuille de matière plastique.

Il est possible qu'une feuille de verre, plusieurs feuilles de verre, voire chaque feuille de verre ai(en)t subi un traitement chimique ou thermique destiné à le renforcer.

Dans une variante, le vitrage selon l'invention comporte en outre au moins un pont de liaison qui est séparé de ladite structure de cadre de vitrage et réalise une liaison entre un bord périphérique d'une face intérieure de la feuille de verre intérieure et un bord périphérique de ladite face intermédiaire de ladite vitre intérieure, de l'autre côté de ladite cavité de vitrage ; ledit pont de liaison est de préférence situé, vu en coupe transversale, au moins en partie et de préférence encore en totalité, plus centripète que ledit retrait.

Ainsi, ce pont de liaison peut participer à retenir la vitre extérieure lorsque la feuille de verre extérieure est cassée accidentellement mais ne s'oppose pas à ce que les vitres soient brisées pour permettre une évacuation de secours.

Avantageusement, ledit pont de liaison est situé à une distance au plus court du chant de ladite vitre extérieure comprise entre 15,0 et 25,0 mm, et de préférence à une distance au plus court du chant de ladite vitre extérieure comprise entre 18,0 et 23,0 mm, ledit pont de liaison étant de préférence continu en étant séparé de ladite structure de cadre de vitrage sur toute sa longueur périphérique

Ledit cordon de colle peut comprendre ou être un cordon de colle à base de polyuréthane ou de silicone ou de MS polymère (c'est-à-dire de polyéther modifié silane) ou de polysulfide, afin que la liaison chimique avec au moins la vitre intérieure soit forte et de préférence que la liaison chimique avec les deux vitres de part et d'autre de la cavité de vitrage soit forte.

Le cordon de colle peut comprendre un profilé métallique qui est collé latéralement de chaque côté de la cavité de vitrage, avec un tel cordon de colle ou être en partie ou complètement intégré dans un tel cordon de colle.

Le cordon de colle pourrait comprendre un câble, et notamment un câble métallique, qui est collé latéralement sur un côté au moins de la cavité de vitrage, afin de permettre de faciliter la rupture de la vitre par traction sur ce câble.

Au moins une feuille de matière plastique du vitrage, voire toutes les feuilles de matière plastique s'il y en a plusieurs, peut ou peuvent présenter en outre une capacité d'isolation phonique.

Avantageusement, la présente invention permet ainsi de réaliser un vitrage multiple fixe de moyen de transport qui présente des caractéristiques d'isolation thermique élevées, des caractéristiques de tenue mécanique élevées, tout en pouvant servir d'issue de secours, avec la certitude que même si cette issue de secours est cassée accidentellement du côté extérieur, elle reste présente dans le vitrage sans risque pour les usagers du moyen de transport, ni pour les personnes pouvant se trouver à proximité de ce moyen de transport lors de son passage.

En particulier, la solution selon l'invention permet d'empêcher que la vitre extérieure soit en totalité expulsée du vitrage sous l'effet d'une ou de plusieurs ondes de pression dynamique et de flux d'air ou même qu'une partie de cette vitre extérieure et en particulier la feuille de verre extérieure, soit en totalité ou en partie expulsée du vitrage sous l'effet d'une ou de plusieurs ondes de pression dynamique et de flux d'air.

Ainsi, grâce à la présence du retrait pour la feuille de verre extérieure de la vitre extérieure feuilletée c'est le feuilletage - et donc en particulier la feuille de verre intérieure par l'intermédiaire de la feuille de matière plastique intercalaire - qui retient les éclats de la feuille de verre extérieure lorsque la feuille de verre extérieure est brisée et le vitrage conserve ainsi une certaine intégrité : le moyen de transport peut continuer à rouler et notamment subir les pressions/dépressions élevées lors de son fonctionnement normal, en particulier lorsqu'il croise un autre moyen de transport ou lorsqu'il entre, est et sort d'un tunnel. Même si le vitrage doit être changé suite à la rupture de la feuille de verre extérieure, cela peut attendre la fin du parcours du moyen de transport avec ses passagers et jusqu'à sa destination finale. Il n'est pas nécessaire de procéder à l'évacuation immédiate des passagers du compartiment dont un vitrage présente une feuille de verre extérieure brisée.

Avantageusement, la présente invention permet ainsi de réaliser un vitrage multiple fixe, éventuellement à fenêtre ouvrable, qui présente une vue extérieure lisse, sans élément mécanique plus à l'extérieur que la face extérieure de la vitre extérieure, pour réaliser ce qu'il est convenu d'appeler « un désaffleurement non visible ».

Les détails et caractéristiques avantageuses de l'invention ressortent de l'exemple non limitatif suivant, illustré à l'aide des figures 1 à 3 ci-jointes illustrant trois modes de réalisation similaires d'un vitrage selon l'invention, vu en coupe transversale verticale, dans le bas du vitrage. Dans ces figures, les proportions entre les dimensions des différents éléments sont respectées afin de faciliter sa lecture.

Les figures 1 à 3 illustrent chacune une partie basse d'un vitrage 1 latéral d'un moyen de transport, selon l'invention, positionné verticalement, tel qu'il peut être vu en coupe transversale verticale de ce moyen de transport.

Il s'agit en particulier d'un vitrage latéral de train.

Ce vitrage réalise ainsi une séparation verticale entre un espace intérieure I qui est à l'intérieur du train et un espace extérieur E qui est à l'extérieur du train.

Ce vitrage 1 est fixe. Il est d'un seul tenant, sans fenêtre ouvrable à l'intérieur comme cela est connu par exemple de la demande internationale de brevet N° WO 2016/042270 ; pour autant, bien que cela ne soit pas décrit en détail ici, l'invention pourrait s'appliquer à un tel vitrage à fenêtre ouvrable.

Ce vitrage 1 présente une face extérieure 101 qui fait face à l'espace extérieur E et une face intérieure 102 qui fait face à l'espace intérieur I.

Ce vitrage 1 comprend :
- une vitre extérieure 2 présentant une face extérieure 21 qui fait face à l'espace extérieur E, une face intermédiaire 22 à l'opposé de la face intérieure, ainsi qu'un chant périphérique,
- une vitre intérieure 6 présentant une face intérieure 62 qui fait face à l'espace intérieur I, une face intermédiaire 61 à l'opposé de la face intérieure, ainsi qu'un chant périphérique 60, et
- une structure de cadre de vitrage 7 qui est située en périphérie de la vitre extérieure 2 et en périphérie de la vitre intérieure 6 et qui tient ces deux vitres ensemble de telle sorte que le vitrage réalise la séparation entre l'espace extérieur et l'espace intérieur en réalisant une cavité de vitrage 8 qui est située entre les vitres 2, 6.

Les feuilles 3, 4, 5 et les vitres 2, 6 du vitrage 1 sont chacune d'un seul tenant.

La vitre intérieure 6 est une feuille de verre monolithique présentant une épaisseur comprise entre 3,0 et 8,0 mm, par exemple de 5,0 mm.

La vitre extérieure 2 est feuilletée et comprend, en partant de l'espace extérieur E : au moins une feuille de verre extérieure 3, une feuille de verre intérieure 5, ainsi qu'une feuille de matière plastique 4 située entre la feuille de verre extérieure 3 et la feuille de verre intérieure 5, chaque feuille 3, 4, 5 de la vitre extérieure 2 présentant un chant 30, 40, 50 périphérique.

La feuille de verre extérieure 3 présente une face extérieure 31 qui est orientée vers l'extérieur E, une face intercalaire 32 qui est orientée vers la feuille de matière plastique 4, intercalaire, avec le chant 30 périphérique situé entre ces deux faces.

La feuille de verre intérieure 5 présente une face intercalaire 51 qui est orientée vers la feuille de matière plastique 4, une face intérieure 52 qui est orientée vers la cavité de vitrage 8, avec le chant 50 périphérique situé entre ces deux faces.

La feuille de matière plastique 4 présente une face intercalaire extérieure 41 qui est orientée vers la face intercalaire 32 et qui est ici au contact de cette face intercalaire 32, une face intercalaire intérieure 42 qui est orientée vers la face intercalaire 51 et qui est ici au contact de cette face intercalaire 51, avec le chant 40 périphérique qui est situé entre ces deux faces intercalaires 41, 42.

La feuille de verre extérieure 3 est par exemple une feuille de verre présentant une épaisseur comprise entre 3,0 et 8,0 mm, par exemple de 6,0 mm.

La feuille de matière plastique 4 intercalaire est par exemple une feuille en polyvinylbutyral (PVB) présentant une épaisseur comprise entre 0,50 et 1,50 mm, par exemple de 0,76 mm. Cette feuille de matière plastique 4 présente de préférence les mêmes dimensions de longueur et de hauteur que la feuille de verre extérieure 3.

La feuille de verre intérieure 5 est une feuille de verre présentant une épaisseur comprise entre 3,0 et 8,0 mm, par exemple de 5,0 mm.

La feuille de verre intérieure 5 est plus grande que la feuille de verre extérieure 30, à la fois en longueur et en hauteur.

Lorsque la vitre extérieure 2, feuilletée, est considérée en coupe, le chant 30 de ladite feuille de verre extérieure 3 est situé en retrait r du chant 50 de ladite feuille de verre intérieure 5 sur une partie au moins de la longueur du chant 30 de ladite feuille de verre extérieure 3 et de préférence sur la totalité de la longueur du chant 30 de ladite feuille de verre extérieure 3.

Ainsi, lorsque la vitre extérieure 2 est observée de face, le retrait r est de préférence présent tout autour de la vitre extérieure 2 : le chant 30 de ladite feuille de verre extérieure 3 est plus vers le centre de la vitre extérieure 2 que le chant 50 de ladite feuille de verre intérieure 5. Ce retrait r est de préférence constant le long d'un bord longitudinal ou latéral considéré ; il est de préférence identique le long de chacun des bords longitudinaux et latéraux de la vitre extérieure 2.

Le retrait r est de préférence compris entre 5,0 et 50,0 mm, et de préférence entre 15,0 et 35,0 mm ; il est ici de 30,0 mm.

Le chant 4) de la feuille de matière plastique 4 est situé en retrait r' du chant 50 de la feuille de verre intérieure 5 sur une partie au moins de la longueur du chant 40 de la feuille de matière plastique 4 et de préférence sur la totalité de la longueur du chant 40 de la feuille de matière plastique 4.

La valeur du retrait r' du chant 40 de la feuille de matière plastique 4 par rapport au chant 50 de la feuille de verre intérieure 5 est de préférence identique à la valeur du retrait r du chant 30 de la feuille de verre extérieure 3 ; ainsi, lorsque la vitre extérieure 2 est observée de face, tout le pourtour de la feuille de matière plastique 4 est de préférence aligné avec le pourtour de la feuille de verre extérieure 3.

Le vitrage 1 est un vitrage fixe dans le sens où la structure de cadre de vitrage 7 est destinée à être fixée à une structure 9 du moyen de transport (ici le train), sans possibilité de bouger par rapport à cette structure 9.

Le vitrage 1 est un vitrage multiple dans le sens où il comporte plusieurs vitres 20, 60 ainsi que la cavité de vitrage 8 qui est située entre les deux vitres 20, 60, cette cavité étant remplie d'air ou de gaz, de préférence neutre comme l'argon ; cette cavité participe à l'isolation thermique conférée par le vitrage 1.

La structure de cadre de vitrage 7 permet ainsi de maintenir les deux vitres 20, 60 à distance l'une de l'autre, avec une distance constante entre les deux vitres 20, 60, ici de 12,0 mm.

La structure de cadre de vitrage 7 comporte un cordon de colle 70 qui est au contact au moins de la vitre intérieure 6 et de ladite feuille de verre intérieure 5 sans être au contact de la feuille de verre extérieure 3.

Le cordon de colle 70 est ici seulement au contact de la face intérieure 62 de ladite vitre intérieure 6, du chant 60 de ladite vitre intérieure 6, du chant 50 de ladite feuille de verre intérieure 5 et de la face intercalaire 51 de ladite feuille de verre intérieure 5 ; Le cordon de colle 70 n'est pas contact avec la face intérieure 52 de de ladite vitre intérieure 5, ni avec la face intermédiaire 61 de ladite feuille de verre intérieure 6. Le cordon de colle 70 n'est pas non plus en contact avec la feuille de matière plastique 4.

Comme visible plus particulièrement sur les figures 1 à 3, la structure de cadre de vitrage 7 comporte des moyens pour créer et maintenir l'existence de la cavité de vitrage 8 et la structure de cadre de vitrage 7 comprend :
- un espaceur 71 qui est situé entre la feuille de verre intérieure 5 et la vitre intérieure 6,
- un cadre 72, présentant en coupe transversale une aile extérieure 73, verticale, une aile intérieure 74 parallèle à l'aile extérieure 73 et une base 75, horizontale, reliant ces ailes, (c'est-à-dire une forme de U, vu en coupe transversale) et
- un cordon de mastic 76, situé entre la feuille de verre intérieure 5 et la vitre intérieure 6 plus en périphérique que l'espaceur 71, sans s'étendre au-delà de la périphérie formée par les chants 50 et 60.

En figures 1 à 3, le cadre 72 est formé de deux profilés en L positionnés en face l'un de l'autre afin que leurs bases soient en face l'une de l'autre et forment ensemble la base 75 ; les ailes des L formant l'aile extérieure 73 et l'aile intérieure 74. La liaison entre les deux bases est sensiblement à l'aplomb de la face intérieure 52. Une série de rivets 92 attache les deux profilés entre eux le long de la périphérie du vitrage.

Le cadre 72 est de préférence collé directement (avec contact direct) à la feuille de verre intérieure 5 et à la vitre intérieure 6 grâce audit cordon de colle 70, sans être collé à la feuille de verre extérieure 3. Plus précisément, l'aile extérieure 73 est collée par le cordon de colle 70 à la face intercalaire 51 de la feuille de verre intérieure 5, l'aile intérieure 74 est collée par le cordon de colle 70 à la face intérieure 62 de la vitre intérieure 6 et la base 75 est collée par le cordon de colle 70 au chant 50 de la feuille de verre intérieure 5, au cordon de mastic 76 et au chant 60 de la vitre intérieure 6 ; le cordon de colle 70 étant de préférence d'un seul tenant.

Bien que cela ne soit pas illustré, il est possible que l'aile intérieure 74 soit rapportée puis fixée à la base 75 par des moyens de fixation mécanique, du type vis, rivet ou clip.

Le cordon de colle 70 remplit de préférence tout l'espace entre la face intérieure 62 de la vitre intérieure 6 et l'aile intérieure 74 ; le cordon de colle 70 ne remplit de préférence pas tout l'espace entre la face intercalaire 51 de la feuille de verre intérieure 5 et l'aile extérieure 73 : l'aile extérieur 73 s'étend plus vers le centre du vitrage, sans toutefois être en contact direct avec la feuille de matière plastique 4 ni avec la feuille de verre extérieure 3.

L'espace restant entre les chants 30, 40 et l'aile extérieur 73 est rempli avec un cordon de joint d'étanchéité 37, par exemple par extrusion directement dans la cavité. Ce cordon de joint d'étanchéité s'étend plus en périphérie que ces chants et est en outre présente entre la face intercalaire 51 de la feuille de verre intérieure 5 et l'aile extérieure 73 du cadre pour entrer en contact avec le cordon de colle 70. Ce cordon de joint d'étanchéité n'appartient pas à la structure de cadre de vitrage car il ne participe pas au maintien mécanique du double vitrage : il sert uniquement à gérer l'étanchéité.

L'aile extérieure 73 est, de préférence, située dans la continuité d'aspect (c'est-à-dire ici à l'aplomb) de la face extérieure 31 de la feuille de verre extérieure 3, c'est-à-dire dans la continuité d'aspect de la face extérieure 21 de la vitre extérieure 2, qui est aussi la face extérieure 101 du vitrage 1.

En figure 1, le cordon de joint d'étanchéité 37 est affleurant avec la face extérieure 31 de la feuille de verre extérieure et ne s'étend pas plus à l'extérieur que cette face extérieure 31 alors qu'en figure 2, le cordon de joint d'étanchéité 37 s'étend plus à l'extérieur que la face extérieure 31 de la feuille de verre extérieure en formant, vue en coupe transversale, un bulbe 38 : il s'étend à la fois sur la face extérieure 31 et à la fois sur l'aile extérieure 73, en les recouvrant chacune sur quelques millimètres.

En outre, la figure 2 montre qu'il est possible de prévoir une rainure 79 dans l'aile extérieure et s'ouvrant en direction de la feuille de verre intérieure 5 afin que le cordon de joint d'étanchéité 37 s'étende dans cette rainure pour former un renflement 39 ; ce renflement permet de renforcer la coopération mécanique entre le cordon de joint d'étanchéité 37 et la structure de cadre de vitrage 7.

L'espaceur 71 est situé à la périphérie de la feuille de verre intérieure 5, c'est-à-dire qu'il suit le chant 50 périphérique de cette feuille de verre, tout en étant situé plus vers le centre du vitrage que ce chant périphérique.

L'espaceur 71 est situé à la périphérie de la vitre intérieure 6, c'est-à-dire qu'il suit le chant 60 périphérique de cette vitre, tout en étant situé plus vers le centre du vitrage que ce chant périphérique.

L'espaceur 71 est situé en retrait des chants 50, 60 de la feuille de verre intérieure 5 et de la vitre intérieure 6, vers le centre du vitrage, tout en étant écarté, lorsque le vitrage est vu en coupe transversale, d'un écart e plus en périphérie que la continuité transversale du chant 30 de la feuille de verre extérieure 3. L'écart e est, de préférence, compris entre 2,0 et 30,0 mm, et de préférence encore entre 5,0 et 20,0 mm, voire entre 6,0 et 15,0 mm ; il est ici de 8,0 mm.

L'espaceur 71 peut être par exemple en matière plastique et/ou en métal et/ou en alliage métallique ; il permet de maintenir les deux vitres 2, 6 à une distance constante l'une de l'autre et de maintenir la cavité de vitrage 8.

L'espaceur 71 est maintenu en position contre la face intermédiaire 61 de la vitre intérieure 6 et contre la face intérieure 52 de ladite vitre intérieure 5 grâce au cordon de mastic 76.

Le cadre 72 comporte par ailleurs des moyens pour la fixation du vitrage 1 qui sont situés plus en périphérie que la base 75 : plusieurs pattes de fixation 78 s'étendent plus en périphérie que la base et chaque patte de fixation est munie d'un trou orienté transversalement. Ce trou permet le passage d'un écrou 90 qui fixe la patte de fixation à la caisse de la structure 9 du train. Un joint d'étanchéité complémentaire 91 est disposé entre le cadre 72 et la caisse de la structure 9.

La structure de cadre de vitrage 7 illustrée en figure 1 forme un montant horizontal bas ; cette structure comporte par ailleurs un montant horizontal haut, ainsi que des montants latéraux gauche et droit. Ces montants sont de préférence en métal ou en alliage métallique.

Il a été vérifié qu'une isolation thermique adéquate est obtenue sur la base de l'exemple de la figure 1, lorsque ladite cavité de vitrage 8 est d'un seul tenant, qu'elle est remplie d'argon et présente une épaisseur uniforme. La distance entre la face extérieure 101 et la face intérieure 102 est ainsi constante et est ici de 28,76 mm.

Un test a été réalisé avec un vitrage du type de celui illustré en figure 1, de dimensions identiques à un vitrage commercial. La feuille de verre extérieure 20 a été cassée, puis le vitrage a été soumis à un programme de sollicitations comprenant 200 cycles de pression-dépression à plus ou moins 8 kPa. Il a été constaté que la feuille de verre extérieure 20 était toujours en place dans le vitrage à l'issue du test, car bien retenu par la feuille de matière plastique 4.

Il a été vérifié qu'une tenue mécanique améliorée est obtenue sur la base de l'exemple de la figure 1 lorsque la feuille de verre extérieure 3 est brisée : elle est correctement maintenue par la feuille de matière plastique 4 lorsque le vitrage 1 est soumis à des conditions similaires à celles qu'il subirait s'il était intégré dans un train roulant à 300 km/h.

Le vitrage 1 illustré en figure 1 est particulièrement compact car l'épaisseur totale t du cadre 72 est ici de 40,0 mm et aucun élément du vitrage ne dépasse plus à l'extérieur ou plus à intérieur que l'épaisseur de ce cadre 72.

Lorsque le vitrage 1 doit être cassé pour permettre l'évacuation, la vitre intérieure 6 est d'abord cassé, par exemple avec un marteau ; ensuite, des chocs répétés contre la feuille de verre intérieure 5 vont casser cette feuille puis permettre de pousser vers l'extérieur l'ensemble de la vitre extérieure 2 grâce à la rupture au niveau de la zone de rupture Z, qui est située tout autour du feuilletage. Cela est facilité par le fait que dans la zone de rupture Z (sur toute la hauteur de cette zone, qui correspond à l'écart e), il n'y a que la feuille de verre intérieure 5 (il n'y a pas la feuille de matière plastique 4, ni la feuille de verre intérieure 3).

Les figures 1 à 3 montrent par ailleurs une bande de masquage 24, périphérique, située sur la face intercalaire 22 de la feuille de verre extérieure 20. Cette couche de masquage cache la périphérie de cette face intercalaire 22. Cette bande de masquage 24 constitue la limite du clair de vision du vitrage illustrée par la ligne présentant la succession de deux pointillés et un trait.

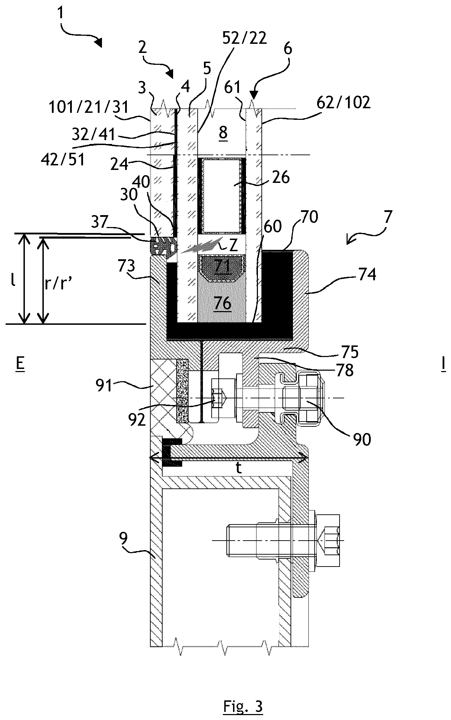

La figure 3 illustre une variante particulière dans laquelle un pont de liaison 26 est présent, ce pont de liaison étant séparé et indépendante de la structure de cadre de vitrage 7 et réalisant une liaison entre un bord périphérique de la face intérieure 52 de la feuille de verre intérieure 5 et un bord périphérique de la face intermédiaire 61 de la vitre intérieure 6, de l'autre côté de la cavité de vitrage 8.

Ledit pont de liaison 26 est situé ici, vu en coupe transversale, au moins en partie et de préférence encore en totalité, plus centripète que ledit retrait r.

Ce pont de liaison 26 attache mécaniquement ce bord périphérique de la feuille de verre intérieure 5 et la surface située de l'autre côté de ladite cavité de vitrage, en vis-à-vis, transversalement : la face intermédiaire 61 de la vitre intérieure 6. Un pont de liaison est différent d'une entretoise (ou « espaceur ») au sens habituel dans la technique considérée ici, car un pont de liaison de participe pas, mécaniquement, à l'existence et au maintien de la cavité de vitrage située entre le substrat extérieur et le substrat intérieur en usage normal du vitrage (lorsque le substrat extérieur est intègre) ; c'est la structure de cadre de vitrage qui crée et maintient cette cavité de vitrage, en comportant notamment une entretoise.

En un sens, le pont de liaison participe à l'existence et au maintien d'une certaine cavité de vitrage située entre la vitre extérieure et la vitre intérieure lorsque la feuille de verre extérieure de la vitre extérieure est cassés et retenu par le feuilletage et le pont de liaison : il s'agit ainsi de permettre de conserver une certaine intégrité au vitrage 1 dans sa globalité, malgré l'existence du retrait r, afin de permettre au moyen de transport de continuer son trajet jusqu'au garage adéquat et permettre ainsi d'éviter l'immobilisation du moyen de transport jusqu'au remplacement du vitrage.

Le pont de liaison 26 est situé à une distance l au plus court du chant 60 de la vitre extérieure 6, au moins égale ou supérieure au retrait r, et comprise entre 15,0 et 25,0 mm, et de préférence à une distance l au plus court du chant 60 comprise entre 18,0 et 23,0 mm ; cette distance lest ici de 21,0 mm pour un retrait r de 20,0 mm.

Le pont de liaison 26 est continu le long de toute la périphérie du vitrage 1, en étant séparé de la structure de cadre de vitrage 7 sur toute sa longueur périphérique.

La zone de rupture z est situé au même endroit qu'en figure 1 et 2, entre l'espaceur 71 et le chant 30 de la feuille de verre extérieure ; malgré la présence du pont de liaison, elle présente la même fonction.

Il s'agit ici d'un profilé en aluminium de section rectangulaire, d'une hauteur de 19,0 mm pour une largeur de 10,0 mm, et qui est fixé à la face intermédiaire 52 ainsi qu'à la face intermédiaire 61 par du ruban adhésif double face.

En figure 3, l'épaisseur totale t du cadre 72 est de 39,5 mm.

En figure 3 par ailleurs, le cordon de joint d'étanchéité 37 est un cordon préfabriqué à ailettes.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

En particulier, il est inclus dans la présente invention que la vitre intérieure 6 peut elle-même être feuilletée.

Bien que cela ne soit pas dessiné, il est possible par ailleurs que la structure de cadre de vitrage ne comporte pas de cordon de colle ; elle peut comporter par exemple un cadre ne présentant pas, vu en coupe transversale, une forme de U comme décrit précédemment mais une forme de L, avec une aile extérieure, une base et sans aile intérieure, cette aile intérieure étant remplacée par un joint de parclose réalisant un maintien de l'ensemble formé par la vitre intérieure, l'espaceur, le mastic et la feuille intérieure de la vitre extérieure directement contre l'aile extérieure du cadre, par pression, sans que la structure de cadre de vitrage ne soit au contact de ladite feuille de verre extérieure.

## Revendications

1. Vitrage (1) latéral d'un moyen de transport, en particulier vitrage de train, ledit vitrage étant un vitrage multiple, fixe, présentant une face extérieure (101) qui fait face à un espace extérieur (E) et une face intérieure (102) qui fait face à un espace intérieur (I), ledit vitrage (1) comprenant :
- une vitre extérieure (2) présentant une face extérieure (21) qui fait face à l'espace extérieur (E), ladite vitre extérieure (2) étant feuilletée et comprenant au moins une feuille de verre extérieure (3), une feuille de verre intérieure (5), ainsi qu'une feuille de matière plastique (4) située entre ladite feuille de verre extérieure (3) et ladite feuille de verre intérieure (5), chaque feuille (3, 4, 5) de ladite vitre extérieure (2) présentant un chant (30, 40, 50) périphérique,
- une vitre intérieure (6) ayant une face intérieure (62) qui fait face à l'espace intérieur (I), une face intermédiaire (61) à l'opposé de la face intérieure, ainsi qu'un chant périphérique (60),
- une structure de cadre de vitrage (7) qui est située en périphérie de ladite vitre extérieure (2) et en périphérie de ladite vitre intérieure (6) et qui tient ces deux vitres ensemble de telle sorte que le vitrage réalise une séparation entre ledit espace extérieur et ledit espace intérieur avec une cavité de vitrage (8) située entre lesdites vitres (2, 6),
***caractérisé en ce que*** le chant (30) de ladite feuille de verre extérieure (3) est situé en retrait (r) du chant (50) de ladite feuille de verre intérieure (5) sur une partie au moins de la longueur du chant (30) de ladite feuille de verre extérieure (3) et de préférence sur la totalité de la longueur du chant (30) de ladite feuille de verre extérieure (3) **et en ce que** ladite structure de cadre de vitrage (7) n'est pas au contact de ladite feuille de verre extérieure (3).

2. Vitrage (1) selon la revendication 1, dans lequel ladite structure de cadre de vitrage (7) comporte un cordon de colle (70) qui est au contact au moins de ladite vitre intérieure (6) et qui n'est pas au contact de ladite feuille de verre extérieure (3) de la vitre extérieure (2).

3. Vitrage (1) selon la revendication 2, dans lequel ledit cordon de colle (70) est au contact de ladite face intérieure (62) de ladite vitre intérieure (6), du chant (60) de ladite vitre intérieure (6), du chant (50) de ladite feuille de verre intérieure (5) et d'une face intercalaire (51) de ladite feuille de verre intérieure (5).

4. Vitrage (1) selon l'une quelconque des revendications 1 à 3, dans lequel le chant (40) de ladite feuille de matière plastique (4) est situé en retrait (r') du chant (50) de ladite feuille de verre intérieure (5) sur une partie au moins de la longueur du chant (40) de ladite feuille de matière plastique (4) et de préférence sur la totalité de la longueur du chant (40) de ladite feuille de matière plastique (4), la valeur du retrait (r') dudit chant (40) de ladite feuille de matière plastique (4) étant de préférence identique à la valeur du retrait (r) dudit chant (30) de ladite feuille de verre extérieure (3).

5. Vitrage (1) selon l'une quelconque des revendications 1 à 4, dans lequel ledit retrait (r) est compris entre 5,0 et 50,0 mm, et de préférence entre 15,0 et 35,0 mm.

6. Vitrage (1) selon l'une quelconque des revendications 1 à 5, dans lequel un espaceur (71) est situé entre ladite feuille de verre intérieure (5) et ladite vitre intérieure (6), en retrait des chants (50, 60) de ladite feuille de verre intérieure (5) et de ladite vitre intérieure (6) tout en étant écarté, vu en coupe transversale, d'un écart (e) plus en périphérie que la continuité transversale du chant (30) de ladite feuille de verre extérieure (3), ledit écart (e) étant compris entre 2,0 et 30,0 mm, et de préférence entre 5,0 et 20,0 mm.

7. Vitrage (1) selon l'une quelconque des revendications 1 à 6, dans lequel ladite structure de cadre de vitrage (7) comprend un cadre (72) présentant en coupe transversale une aile extérieure (73), une aile intérieure (74) parallèle à ladite aile extérieure (73) et une base (75) reliant lesdites ailes, ledit cadre (72) étant de préférence collé directement à ladite feuille de verre intérieure (5) et à ladite vitre intérieure (6) grâce audit cordon de colle (70).

8. Vitrage (1) selon la revendication 7, dans lequel ladite aile extérieure (73) est située dans la continuité d'aspect d'une face extérieure (31) de ladite feuille de verre extérieure (3).

9. Vitrage (1) selon l'une quelconque des revendications 7 ou 8, dans lequel un cordon de joint d'étanchéité (37) est présent entre le chant (30) de ladite feuille de verre extérieure (3) et l'aile extérieure (73) dudit cadre (72).

10. Vitrage (1) selon l'une quelconque des revendications 7 à 9, dans lequel ledit cadre (72) comporte des moyens pour la fixation dudit vitrage (1) qui sont situés plus en périphérie que ladite base (75).

11. Vitrage (1) selon l'une quelconque des revendications 1 à 10, dans lequel aucun élément ne fait saillie vers l'extérieur au-delà de la face extérieure (101) dudit vitrage (1).

12. Vitrage (1) selon l'une quelconque des revendications 1 à 11, dans lequel au moins un pont de liaison (26) qui est séparé de ladite structure de cadre de vitrage (7) réalise une liaison entre un bord périphérique d'une face intérieure (52) de la feuille de verre intérieure (5) et un bord périphérique de ladite face intermédiaire (61) de ladite vitre intérieure (6), de l'autre côté de ladite cavité de vitrage (8), ledit pont de liaison (26) étant de préférence situé, vu en coupe transversale, au moins en partie et de préférence encore en totalité, plus centripète que ledit retrait (r).

13. Vitrage (1) selon la revendication 12, dans lequel ledit pont de liaison (26) est situé à une distance (l) au plus court du chant (60) de ladite vitre extérieure (6) comprise entre 15,0 et 25,0 mm, et de préférence à une distance (l) au plus court du chant (60) de ladite vitre extérieure (6) comprise entre 18,0 et 23,0 mm, ledit pont de liaison (26) étant de préférence continu en étant séparé de ladite structure de cadre de vitrage (7) sur toute sa longueur périphérique.

## Patentansprüche

1. Seitenverglasung (1) eines Transportmittels, insbesondere Zugverglasung, wobei die Verglasung eine feste Mehrfachverglasung ist, die eine Außenfläche (101), die einem Außenraum (E) zugewandt ist, und eine Innenfläche (102), die einem Innenraum (I) zugewandt ist, aufweist, wobei die Verglasung (1) umfasst:
- eine Außenscheibe (2), die eine Außenfläche (21) aufweist, die dem Außenraum (E) zugewandt ist, wobei die Außenscheibe (2) laminiert ist und mindestens eine äußere Glasscheibe (3), eine innere Glasscheibe (5) sowie eine Kunststoffscheibe (4) umfasst, die zwischen der äußeren Glasscheibe (3) und der inneren Glasscheibe (5) angeordnet ist, wobei jede Scheibe (3, 4, 5) der Außenscheibe (2) einen Umfangsrand (30, 40, 50) aufweist,
- eine Innenscheibe (6) mit einer Innenfläche (62), die dem Innenraum (I) zugewandt ist, einer Zwischenfläche (61) gegenüber der Innenfläche sowie einem Umfangsrand (60),
- eine Verglasungsrahmenstruktur (7), die am Umfang der Außenscheibe (2) und am Umfang der Innenscheibe (6) angeordnet ist und die diese beiden Scheiben derart zusammenhält, dass die Verglasung eine Trennung zwischen dem Außenraum und dem Innenraum mit einem Verglasungshohlraum (8) herstellt, der zwischen den Scheiben (2, 6) angeordnet ist,
**dadurch gekennzeichnet, dass** der Rand (30) der äußeren Glasscheibe (3) über mindestens einen Teil der Länge des Randes (30) der äußeren Glasscheibe (3) und vorzugsweise über die gesamte Länge des Randes (30) der äußeren Glasscheibe (3) von dem Rand (50) der inneren Glasscheibe (5) zurückgesetzt (r) angeordnet ist **und dass** die Verglasungsrahmenstruktur (7) nicht mit der äußeren Glasscheibe (3) in Kontakt steht.

2. Verglasung (1) nach Anspruch 1, wobei die Verglasungsrahmenstruktur (7) einen Kleberstrang (70) aufweist, der zumindest mit der Innenscheibe (6) in Kontakt steht und der nicht mit der äußeren Glasscheibe (3) der Außenscheibe (2) in Kontakt steht.

3. Verglasung (1) nach Anspruch 2, wobei der Kleberstrang (70) mit der Innenseite (62) der Innenscheibe (6), dem Rand (60) der Innenscheibe (6), dem Rand (50) der inneren Glasscheibe (5) und einer Zwischenfläche (51) der inneren Glasscheibe (5) in Kontakt steht.

4. Verglasung (1) nach einem der Ansprüche 1 bis 3, wobei der Rand (40) der Kunststoffscheibe (4) über mindestens einen Teil der Länge des Randes (40) der Kunststoffscheibe (4) und vorzugsweise über die gesamte Länge des Randes (40) der Kunststoffscheibe (4) von dem Rand (50) der inneren Glasscheibe (5) zurückgesetzt (r') angeordnet ist, wobei der Wert des Einzugs (r') des Randes (40) der Kunststoffscheibe (4) vorzugsweise identisch mit dem Wert des Einzugs (r) des Randes (30) der äußeren Glasscheibe (3) ist.

5. Verglasung (1) nach einem der Ansprüche 1 bis 4, wobei der Einzug (r) zwischen 5,0 und 50,0 mm und vorzugsweise zwischen 15,0 und 35,0 mm beträgt.

6. Verglasung (1) nach einem der Ansprüche 1 bis 5, wobei ein Abstandshalter (71) zwischen der inneren Glasscheibe (5) und der Innenscheibe (6), von den Rändern (50, 60) der inneren Glasscheibe (5) und der Innenscheibe (6) zurückgesetzt und gleichzeitig beabstandet ist, im Querschnitt um einen Abstand (e) weiter am Umfang als die transversale Fortsetzung des Randes (30) der äußeren Glasscheibe (3) angeordnet ist, wobei der Abstand (e) zwischen 2,0 und 30,0 mm und vorzugsweise zwischen 5,0 und 20,0 mm beträgt.

7. Verglasung (1) nach einem der Ansprüche 1 bis 6, wobei die Verglasungsrahmenstruktur (7) einen Rahmen (72) umfasst, der im Querschnitt einen äußeren Flügel (73), einen inneren Flügel (74) parallel zu dem äußeren Flügel (73) und eine Basis (75) aufweist, welche die Flügel verbindet, wobei der Rahmen (72) vorzugsweise direkt mit der inneren Glasscheibe (5) und der Innenscheibe (6) mithilfe des Kleberstrangs (70) verklebt ist.

8. Verglasung (1) nach Anspruch 7, wobei der äußere Flügel (73) in Fortsetzung der Erscheinung einer Außenfläche (31) der äußeren Glasscheibe (3) angeordnet ist.

9. Verglasung (1) nach einem der Ansprüche 7 oder 8, wobei ein Dichtungswulst (37) zwischen dem Rand (30) der äußeren Glasscheibe (3) und dem äußeren Flügel (73) des Rahmens (72) vorliegt.

10. Verglasung (1) nach einem der Ansprüche 7 bis 9, wobei der Rahmen (72) Mittel für die Befestigung der Verglasung (1) aufweist, die weiter am Umfang als die Basis (75) angeordnet sind.

11. Verglasung (1) nach einem der Ansprüche 1 bis 10, wobei kein Element über die Außenseite (101) der Verglasung (1) hinaus nach außen vorspringt.

12. Verglasung (1) nach einem der Ansprüche 1 bis 11, wobei mindestens eine Verbindungsbrücke (26), die von der Verglasungsrahmenstruktur (7) getrennt ist, eine Verbindung zwischen einer Umfangskante einer Innenfläche (52) der inneren Glasscheibe (5) und einer Umfangskante der Zwischenfläche (61) der inneren Glasscheibe (6), auf der anderen Seite des Verglasungshohlraums (8), herstellt, wobei die Verbindungsbrücke (26) vorzugsweise, im Querschnitt, zumindest teilweise und vorzugsweise sogar vollständig zentripetaler als der Einzug (r) angeordnet ist.

13. Verglasung (1) nach Anspruch 12, wobei die Verbindungsbrücke (26) in einem kürzesten Abstand (I) vom Rand (60) der Außenscheibe (6) von 15,0 bis 25,0 mm und vorzugsweise in einem kürzesten Abstand (I) vom Rand (60) der Außenscheibe (6) von 18,0 bis 23,0 mm angeordnet ist, wobei die Verbindungsbrücke (26) vorzugsweise kontinuierlich ist, indem sie über ihre gesamte Umfangslänge von der Verglasungsrahmenstruktur (7) getrennt ist.

## Claims

1. A lateral glazed unit (1) for a transport means, in particular a train glazed unit, said glazed unit being a multiple, fixed glazed unit having an outer face (101) that faces an outer space (E) and an inner face (102) that faces an inner space (I), said glazed unit (1) comprising:
- an outer glass pane (2) having an outer face (21) that faces the outer space (E), said outer glass pane (2) being laminated and comprising at least one outer glass sheet (3), one inner glass sheet (5), as well as a plastic material sheet (4) located between said outer glass sheet (3) and said inner glass sheet (5), each sheet (3, 4, 5) of said outer glass pane (2) having a peripheral edge (30, 40, 50);
- an inner glass pane (6) having an inner face (62) that faces the inner space (I), an intermediate face (61) opposite the inner face, as well as a peripheral edge (60);
- a glazed unit frame structure (7), which is located on the periphery of said outer glass pane (2) and on the periphery of said inner glass pane (6) and which holds together these two glass panes in such a way that the glazed unit provides a separation between said outer space and said inner space with a glazed unit cavity (8) located between said glass panes (2, 6);
***characterized in that*** the edge (30) of said outer glass sheet (3) is located setback (r) from the edge (50) of said inner glass sheet (5) on at least part of the length of the edge (30) of said outer glass sheet (3) and preferably over the entire length of said edge (30) of said outer glass sheet (3), **and in that** said glazed unit frame structure (7) is not in contact with said outer glass sheet (3).

2. The glazed unit (1) as claimed in claim 1, wherein said glazed unit frame structure (7) comprises a glue bead (70) that is in contact at least with said inner glass pane (6) and that is not in contact with said outer glass sheet (3) of the outer glass pane (2).

3. The glazed unit (1) as claimed in claim 2, wherein said glue bead (70) is in contact with said inner face (62) of said inner glass pane (6), with the edge (60) of said inner glass pane (6), with the edge (50) of said inner glass sheet (5) and with an interposed face (51) of said inner glass sheet (5).

4. The glazed unit (1) as claimed in any of claims 1 to 3, wherein the edge (40) of said plastic material sheet (4) is located setback (r') from the edge (50) of said inner glass sheet (5) on at least part of the length of the edge (40) of said plastic material sheet (4) and preferably over the entire length of said edge (40) of said plastic material sheet (4), the value of the setback (r') of said edge (40) of said plastic material sheet (4) preferably being identical to the value of the setback (r) of said edge (30) of said outer glass sheet (3).

5. The glazed unit (1) as claimed in any of claims 1 to 4, wherein said setback (r) is between 5 and 50 mm, and preferably between 15 and 35 mm.

6. The glazed unit (1) as claimed in any of claims 1 to 5, wherein a spacer (71) is located between said inner glass sheet (5) and said inner glass pane (6), setback from the edges (50, 60) of said inner glass sheet (5) and of said inner glass pane (6), while being spaced apart, viewed as a cross-section, by a gap (e) that is more on the periphery than the transverse extension of the edge (30) of said outer glass sheet (3), said gap (e) being between 2 and 30 mm, and preferably between 5 and 20 mm.

7. The glazed unit (1) as claimed in any of claims 1 to 6, wherein said glazed unit frame structure (7) comprises a frame (72) having, as a cross-section, an outer wing (73), an inner wing (74) parallel to said outer wing (73) and a base (75) connecting said wings, said frame (72) preferably being glued directly to said inner glass sheet (5) and to said inner glass pane (6) by means of said glue bead (70).

8. The glazed unit (1) as claimed in claim 7, wherein said outer wing (73) is located in line with an outer face (31) of said outer glass sheet (3).

9. The glazed unit (1) as claimed in any of claims 7 or 8, wherein a sealing gasket bead (37) is present between the edge (30) of said outer glass sheet (3) and the outer wing (73) of said frame (72).

10. The glazed unit (1) as claimed in any of claims 7 to 9, wherein said frame (72) comprises means for fastening said glazed unit (1) that are located more on the periphery than said base (75).

11. The glazed unit (1) as claimed in any of claims 1 to 10, wherein no element projects toward the outside, beyond the outer face (101) of said glazed unit (1).

12. The glazed unit (1) as claimed in any of claims 1 to 11, wherein at least one connection bridge (26), which is separated from said glazed unit frame structure (7), provides a connection between a peripheral edge of an inner face (52) of the inner glass sheet (5) and a peripheral edge of said intermediate face (61) of said inner glass pane (6), on the other side of said glazed unit cavity (8), said connection bridge (26) preferably being located, viewed as a cross-section, at least partly, and more preferably fully, further toward the center than said setback (r).

13. The glazed unit (1) as claimed in claim 12, wherein said connection bridge (26) is located at a shortest possible distance (l) from the edge (60) of said outer glass pane (6) between 15 and 25 mm, and preferably at a shortest possible distance (l) from the edge (60) of said outer glass pane (6) between 18 and 23 mm, said connection bridge (26) preferably being continuous, while being spaced apart from said glazed unit frame structure (7) over the entirety of its peripheral length.
